(19) Europäisches Patentamt
European Patent Office
Office européen des brevets

(11) Publication number: **0 221 147**
**B1**

(12) # EUROPEAN PATENT SPECIFICATION

(45) Date of publication of patent specification: **28.06.89**

(51) Int. Cl.[4]: **C 07 C149/00**, C 10 M135/02

(21) Application number: **86903041.1**

(22) Date of filing: **23.04.86**

(86) International application number: **PCT/US 86/00884**

(87) International publication number: **WO/8606371 (06.11.86 Gazette 86/24)**

(54) **SULFUR-CONTAINING COMPOSITIONS, AND ADDITIVE CONCENTRATES, LUBRICATING OILS, AND METAL WORKING LUBRICANTS CONTAINING SAME.**

(30) Priority: **25.04.85 US 727453**

(43) Date of publication of application: **13.05.87 Bulletin 87/20**

(45) Publication of the grant of the patent: **28.06.89 Bulletin 89/26**

(84) Designated contracting states: **AT BE CH DE FR GB IT LI NL SE**

(56) References cited:
**EP-A- 0 102 425**
**US-A- 3 780 113**
**US-A- 3 953 347**

(73) Proprietor: **The Lubrizol Corporation**
**29400 Lakeland Boulevard**
**Wickliffe, Ohio 44092 (US)**

(72) Inventor: **KOCH, Frederick, W.**
**36752 Beech Hills Drive**
**Willoughby Hills, OH 44094 (US)**
Inventor: **FLOYD, Robert, L.**
**4488 Parkton Drive**
**Warrensville Heights, OH 44128 (US)**

(74) Representative: **Crisp, David Norman et al**
**D. YOUNG & CO. 10 Staple Inn**
**London, WC1V 7RD (GB)**

**EP 0 221 147 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue St-Denis, 75001 Paris, France

## Description

This invention relates to sulfur-containing compositions and processes for their preparation. The compositions are generally oil-soluble and may be useful as additives for lubricating oils and particularly for metal working lubricants. More particularly, the invention relates to an improved method of sulfurizing fatty acid esters, fatty acids, aliphatic olefins and mixtures thereof utilizing as a catalyst, phosphoric acid, phosphoric acid salts, or mixtures thereof, as well as to sulfurized compositions.

Various compositions prepared by the sulfurization of organic compounds and more particularly olefins and olefin-containing compounds are known in the art, as are lubricants containing these products. Typical sulfurized compositions prepared by reacting olefins such as isobutene, diisobutene, and triisobutene with sulfur under various conditions are described in, for example, Chemical Reviews, 65, 237 (1965). Other references describe the reaction of such olefins with hydrogen sulfide and elemental sulfur to form predominantly mercaptans with sulfides, disulfides and higher polysulfides also being formed as by-products. Reference is made to J. Am. Chem. Soc., 60, 2452 (1938), and U.S. Patents 3,221,056, 3,419,614 and 4,191,659. U.S. Patent 3,419,614 describes a process for increasing the yield of mercaptan by carrying out the reaction of olefin with hydrogen sulfide and sulfur at a high temperature in the presence of various basic materials. U.S. Patent 4,191,659 describes the preparation of sulfurized compositions by reaction at superatmospheric pressure of olefins with a mixture of sulfur and hydrogen sulfide in the presence of a catalyst followed by treatment with an alkali metal sulfide. The use of sulfurized natural and synthetic oils as additives in lubricating compositions has been suggested in the art such as in, for example, U.S. Patents 2,299,813 and 4,360,438.

In the past, sulfurized sperm oil was used widely as an additive in many lubricant formulations such as in gear oil, worm, and spur gears, automatic transmission fluids, waxing lubricants, and as metal-working additives. Sulfurized sperm oil is especially useful for improving extreme pressure properties while providing excellent « slip » and some degree of rust-inhibition in motor oils, gear lubricants, and rolling oils. However, the sulfurized sperm oils have been replaced in recent years by other sulfurized compositions as a result of the reduction in availability of sperm oil and increased cost. Sulfurized olefins such as those described above do not always exhibit the degree of lubricity which is necessary in many applications.

Sulfurized fatty oils such as sulfurized lard oil have been described in the art, but sulfurized lard oil generally is not adequately soluble in paraffinic base oils to be useful. Several patents have issued in the last decade suggesting solutions to the solubility problems exhibited by sulfurized lard oil. A number of the prior art suggestions have involved sulfurizing mixtures of fatty oils such as lard oil and soybean oil and various olefinic compounds. For example, U.S. Patents 3,953,347 and 3,926,822 describe compositions of matter useful as lubricant additives which are sulfurized compositions prepared by reacting sulfur with a mixture comprising at least one fatty acid ester, at least one aliphatic olefin containing about 8 to about 36 carbon atoms and optionally, at least one fatty acid. The sulfurized compositions are prepared by heating such mixtures of fatty acid ester and fatty acid olefin with sulfur at temperatures of from 65 to about 200 °C. In addition to the above-described reagent, the reaction mixture may also include sulfurization promoters such as phosphorous-containing reagents such as phosphorous acid esters, and surface-active agents such as lecithin. An example of a phosphorous-acid ester given in these patents is triphenylphosphite.

U.S. Patent 4,188,300 describes a sulfurized product obtained by sulfurizing an olefin with a prime burning grade lard oil having a very low free acid content. These products are reported to exhibit improved solubility in paraffinic oils as compared to products obtained when an olefin is co-sulfurized with lard oil having a higher content of free acids such as winter-strained lard oil or extra winter-strained lard oil. Co-sulfurized products containing about 5 to 25 % by weight of sulfur are obtained and are reported as being useful as metal-working oil additives. The preparation of various synthetic sulfurized oil of the reaction of sulfur, lard oil and polyisobutylene oligomers containing at least one pair of maximally crowded geminal methyl groups (e. g., tetraisobutylene) is described in U.S. Patent 4,166,795. The preparation of synthetic sulfurized oil useful as the replacement for sulfurized sperm oil also is described in U.S. Patents 3,843,534 ; 3,825,495 ; 4,166,795 ; 4,166,796 ; 4,166,797 ; 4,321,153 ; 4,456,540 ; and 4,487,705. The sulfurization generally is carried out using elemental sulfur, and simultaneous sulfurization and chlorination may be effected by reacting with sulfur monochloride. Phosphosulfurization is described in these patents and may be carried out by addition of small amounts of a phosphorus sulfide to the sulfurized blend followed by heating.

When preparing sulfurized compositions for use as lubricant additives, it generally is desirable to obtain products by the most inexpensive procedure utilizing inexpensive raw material. The color of the sulfurized compositions obtained should preferably be light, and the sulfur contained in the products should not be active sulfur.

This invention also relates to metal working operations and more particularly to lubricants for use during such operations. In its broadest sense, it comprises a method for lubricating metal during working thereof and metal workpieces having on the surface thereof a film of a lubricant composition. Said composition comprises a major amount of a lubricating oil and a minor amount of at least one sulfurized composition prepared in accordance with this invention.

Metal working operations, for example, rolling, forging, hot-pressing, blanking, bending, stamping, drawing, cutting, punching, spinning and the like, generally employ a lubricant to facilitate the same. Lubricants greatly improve these operations in that they can reduce the power required for the operation, prevent sticking and decrease wear of dies, cutting tools and the like. In addition, they frequently provide rust-inhibiting properties to the metal being treated.

Many presently known metal working lubricants are oil-based lubricants containing a relatively large amount of active sulfur present in additives therein. (By « active sulfur » as used herein is meant chemically combined sulfur in a form which causes staining of cooper.) The presence of active sulfur is sometimes detrimental because of its tendency to stain copper, as well as other metals including brass and aluminum. Nevertheless, its presence has frequently been necessary because of the beneficial extreme pressure properties of active sulfur-containing compositions, especially for the working of ferrous metals.

In accordance with one aspect, the invention provides a sulfurized composition prepared by reacting at a temperature in the range of about 50 °C to about 350 °C, sulfur in an amount sufficient to cause sulfurization, with a reactant selected from

(A) fatty acid esters of polyhydric alcohols, and
(B) fatty acids, fatty acid esters of a monohydric alcohol, or mixtures thereof,
(C) aliphatic olefins containing from 8 to 36 carbons atoms, or
(D) mixtures of any of (A), (B) and (C),
(E) in the presence of a catalytic amount of a catalyst selected from a phosphoric acid, a phosphoric acid salt, or a mixture thereof.

In a further aspect, the invention provides a process for preparing a sulfurized composition comprising the steps of :

reacting, at a temperature in the range of about 50 °C to about 350 °C, sulfur with a hydrocarbyl selected from fatty acids, fatty acid esters of monohydric alcohols, and aliphatic olefins containing 8 to 36 carbon atoms ;

continuing the reacting until the hydrocarbyl is sulfurized ; and isolating a sulfurized composition reaction product,

wherein the reaction is carried out in the presence of a catalytic amount of a catalyst comprising a phosphoric acid or a phosphoric acid salt.

In a preferred aspect, sulfurized compositions may be prepared in accordance with the invention by reacting at an elevated temperature, sulfur with a mixture of (A) about 100 parts by weight of at least one fatty acid ester of a polyhydric alcohol, (B) from about 0 to about 200 parts by weight of at least one fatty acid, fatty acid ester of a monohydric alcohol, or a mixture thereof, (C) from about 0 to about 400 parts by weight of at least one aliphatic olefin containing from 8 to 36 carbon atoms, and (E) a catalytic amount of phosphoric acid, a phosphoric acid salt, or a mixture thereof. Preferably, the above mixtures will contain at least about 2 parts of the fatty acid or fatty acid ester (B), and at least about 25 parts of the aliphatic olefin (C). The incorporation of a catalytic amount of phosphoric acid, a phosphoric acid salt such as a sodium orthophosphate, or a mixture thereof results in the preparation of sulfurized compositions which are characterised by higher sulfur contents, and the compositions are lighter in color when compared to sulfurized compositions prepared in the absence of such catalysts. The sulfurized compositions prepared in accordance with the present invention are useful as general purpose antioxidants and friction modifiers for lubricating compositions, and in particular, as additives in metal working lubricants.

Preferred embodiments and features of the invention are described below.

Component (A) which is sulfurized in accordance with the present invention may be at least one fatty acid ester of a polyhydric alcohol. The term « fatty acid » as used in the specification and claims refers to acids which may be obtained by the hydrolysis of a naturally occurring vegetable or animal fat or oil. These are usually in $C_{16-20}$ range and include palmitic acid, stearic acid, oleic acid, linoleic acid, etc.

The fatty acid esters which are useful as component A are the fatty acid esters of polyhydric alcohols. Examples of suitable polyhydric alcohols include ethylene glycol, propylene glycol, trimethylene glycol, neopentyl glycol, glycerol, etc. Fatty oils which are naturally occurring esters of glycerol with the above-noted long chain carboxylic acids, and synthetic esters of similar structure are useful. Usually preferred fatty acid esters in the process of the present invention are fatty oils derived from unsaturated acids, especially oleic and linoleic acids, including such naturally occurring animal fats and vegetable oils as tall oil, lard oil, peanut oil, cottonseed oil, soybean oil, sunflower oil, corn oil, etc. Specially grown sunflower oils containing high amounts of oleic acid (e. g., > 80 % by weight or more of oleic acid) can be sulfurized in accordance with the process of this invention. Such sunflower oils are available commercially under the general trade designation TRISUN from SVO Enterprises Corporation, Wickliffe, Ohio.

Although various compositions prepared in accordance with the method of the invention utilizing only one type of fatty acid ester of a polyhydric alcohol are soluble and useful as oil additives, the use of mixtures of fatty acid esters of polyhydric alcohols is preferred. In particular, mixtures of fatty acid esters of polyhydric alcohols containing at least about 50 % by weight of lard oil, generally from about 50 % to about 80 % by weight of lard oil results in the formation of sulfurized compositions containing the

desirably high amounts of sulfur and are relatively inexpensive. Moreover, such sulfurized materials prepared in accordance with the process of this invention are characterized by a reduction in undesirable color. The examples of mixtures based on lard oil include, for example, a mixture of 50 parts by weight of lard oil and 50 parts by weight of soybean oil, a mixture containing 75 parts of lard oil and 25 parts of soybean oil, and a mixture comprising 60 parts of lard oil and 40 parts of peanut oil.

The compositions which can be sulfurized in accordance with the method of the present invention may be (B) at least one fatty acid or fatty acid ester of a monohydric alcohol, or mixtures thereof. Fatty acids of the type described above can be utilized, and the fatty acids generally utilized are unsaturated fatty acids such as oleic acid, stearic or linoleic acid. Mixtures of fatty acids such as obtained from tall oil or by the hydrolysis of peanut oil, soybean oil, sunflower oil, etc., also are useful. Esters of fatty acids obtained from monohydric alcohols containing up to about 20 carbon atoms can be utilized as component (B) either alone or in combination with fatty acids. Examples of monohydric alcohols useful in preparing the fatty acid esters include methanol, ethanol, n-propanol, isopropanol, the butanols, etc. Specific examples of fatty acid esters of monohydric alcohols useful as component (B) in the process of the invention include methyl oleate, ethyl oleate, lauryl oleate, methyl linoleate, oleyl stearate, cetyl linoleate, etc.

As mentioned above, the sulfurized compositions of this invention may be derived from at least one aliphatic olefin containing from 8 to 36 carbon atoms. Preferably, the olefins will contain 8 to 20 carbon atoms. The olefins useful as (C) in this invention may be terminal olefins (i. e., alpha-olefins), internal olefins or mixtures thereof. The alpha-olefins useful in this invention are illustrated by 1-octene, 1-decene, 1-dodecene, 1-tetradecene, 1-hexadecene, 1-octadecene, 1-eicosene. The internal olefins may be represented by the following general formula

$$CH_3(CH_2)_nCH{=}CH{-}(CH_2)_mCH_3$$

wherein n and m are independently integers from 0 to about 15 and the total number of carbon atoms is at least 8. Exmples of internal olefins useful in this invention include 2-octene, 2-dodecene, 4-dodecene, 9-octadecene, 7-tetradecene, 7-hexadecene and 11-eicodecene. Mixtures of two or more olefins including mixtures of alpha- and internal olefins are useful. One method for preparing such mixtures of olefins is by the isomerization of commercially available alpha-olefins, and the product of the isomerization reaction is a mixture of olefins wherein the double bond is in the 1,2,3,4, etc. position. Alternatively, the mixtures of olefins may be obtained by fractionation or by blending of olefins of various types and molecular weights. The isomerization of terminal olefins is effected by heating the olefin with mildly acidic catalysts such as Amberlyst 15. Alpha-olefins, and particularly those containing about 10 to about 20 carbon atoms are preferred. Mixtures of such olefins are commercially available and are particularly desirable for use in the present invention.

The olefins may be branched aliphatic olefins. Examples of branched olefins include oligomers of propylene and isobutylene such as propylene tetramer and triisobutylene.

The compositions which can be sulfurized in accordance with this invention may be (D) a mixture of two or more of (A), (B) and (C) described above. Thus a mixture of (A) at least one fatty acid ester and (C) at least one olefin may be sulfurized by the process of this invention. Other combinations include the following : (A) and (B) ; (B) and (C) ; and (A), (B) and (C).

Preferred sulfurized compositions of the invention may be prepared by reacting at an elevated temperature sulfur with a mixture comprising (A) about 100 parts by weight of at least one fatty acid ester of a polyhydric alcohol, (B) from about 0 to about 200 parts by weight of at least one fatty acid, fatty acid ester of a monohydric alcohol, or a mixture thereof, (C) from about 0 to about 400 parts by weight of at least one aliphatic olefin containing from 8 to 36 carbon atoms, and (E) a catalytic amount of phosphoric acid, a phosphoric acid salt, or a mixture thereof. Preferably these mixtures will contain at least about two parts of the fatty acid or fatty acid ester (B). A preferred range is from about 2 to about 100 parts of (B) per 100 parts of (A). Other preferred mixtures contain at least about 25 parts of the aliphatic olefin (C). A particularly useful range of (C) is from about 25 to about 100 parts of (C) per 100 parts of (A). In another preferred embodiment the mixture which is sulfurized will contain all three components (A), (B) and (C).

The sulfurization reactions of the present invention are carried out in the presence of (E) a catalytic amount of phosphoric acid, a phosphoric acid salt, or a mixture thereof. The phosphorus acid salts preferably are alkali metal phosphates such as sodium monoacid orthophosphate, potassium monoacid orthophosphate, and sodium diacid orthophosphate. The alkali metal phosphates can be formed in situ by merely adding an alkali metal hydroxide such as sodium hydroxide and phosphoric acid to the mixture which is to be sulfurized.

The amount of phosphoric acid, phosphoric acid salt, or mixtures thereof which is included in the reaction in accordance with the present invention may range from about 0.0001 to about 5 parts by weight of the catalyst per 100 parts of the combined weight of components (A), (B) and (C). Larger amounts of the catalyst may be used but are not necessary. Although phosphoric acid salts can be utilized, the sulfurization reaction is catalyzed by phosphoric acid alone, and this catalyst is preferred. Generally, the phosphoric acid will be introduced into the reaction mixture as 85 % phosphoric acid. The order of mixing the various components is not critical although when an alkali metal phosphate is to be utilized as a

catalyst, the alkali metal hydroxide initially is added to the reaction mixture which is heated, and thereafter, the phosphoric acid is added prior to introduction of the sulfurizing agent.

The sulfurization reaction generally is effected at an elevated temperature of from about 50 to about 350°C, more preferably, at a temperature of from about 100° to about 250 °C. The reaction is effected with efficient agitation and usually in an inert atmosphere such as nitrogen. If any of the reagents are appreciably volatile at the reaction temperature, the reaction vessel may be sealed and maintained under pressure. Although generally not necessary, the reaction may be effected in the presence of an inert solvent such as an alcohol, ether, ester, aliphatic hydrocarbon, halogenated aromatic hydrocarbon, etc., which is a liquid within the temperature range employed for the reaction.

It is frequently advantageous to add sulfur for the sulfurizing reaction portionwise to the mixture of the other reagents. With the use of elemental sulfur as the sulfurizing agent, the reaction is exothermic which can give rise to a cost-cutting benefit. The amount of sulfur added to the reaction mixture can be varied over a wide range although the amount included in the reaction mixture should be an amount sufficient to provide a sulfurized product containing the desired amount of sulfur which generally is at least about 10 % by weight.

Following the sulfurization reaction, it is preferred to remove substantially all low boiling materials, typically by venting the reaction vessel, by sparging with an inert gas such as nitrogen, by vacuum distillation or stripping, etc. Insoluble by-products may be removed by filtration if necessary, usually at an elevated temperature (about 80°-120 °C).

A further optional step in the preparation of the sulfurized compositions is the treatment of the sulfurized product obtained as described above to reduce any active sulfur which may be present. An illustrative method is the treatment with an alkali metal sulfide. Other optional treatments may be employed to improve product quality such as odor, color, and staining characteristics of the sulfurized compositions.

The following examples illustrate the preparation of sulfurized compositions of the present invention. Unless otherwise indicated in the examples and elsewhere in the specification and claims, all parts and percentages are by weight, and temperatures are in degrees centigrade.

### Example 1

A mixture of 1 500 parts of peanut oil, 681 parts of methyl oleate and 9 parts of a 50 % aqueous solution of sodium hydroxide is prepared in a reaction vessel and heated for about 3 hours at about 98 °C. Phosphoric acid (85 %, 16.5 parts) is added, and after stirring the mixture for about 15 minutes, 81 parts of oleic acid are added. This mixture is sparged with nitrogen to about 148 °C whereupon 266 parts of sulfur are added in three increments. The temperature of the reaction mixture is raised to about 200 °C and maintained at this temperature for a total of about 7 hours and filtered while hot through a filter aid. The filtrate is the desired product containing 10.1 % sulfur (theory 10.0).

### Example 2

A mixture of 300 parts of soybean oil, 300 parts of winter-strained lard oil, and 5 parts of a 50 % aqueous sodium hydroxide solution is prepared and heated to a temperature of 100 °C and maintained at this temperature for about 2.5 hours. Phosphoric acid (85 %, 2 parts) and 100 parts of methyl oleate are added, and the mixture is heated to a temperature of about 150 °C in a nitrogen atmosphere. To this mixture there is added 164.2 parts of sulfur in three increments, and after addition of the sulfur is completed, the temperature of the mixture is raised to about 200 °C and maintained at this temperature for about 0.5 hour. The source of nitrogen is removed and the mixture is maintained at 200 °C for 2.5 hours, and, thereafter, for an additional 3 hours while sparging with nitrogen. The mixture is cooled to about 50 °C and filtered through a filter aid. The filtrate is the desired product containing 9.97 % sulfur (theory 10.0).

### Example 3

A mixture of 500 parts of peanut oil, 227 parts of soybean oil and 3 parts of a 50 % aqueous solution of sodium hydroxide is prepared and heated to a temperature of 100 °C for about 3 hours. Phosphoric acid (85 %, 5.6 parts) and 27 parts of oleic acid are added to the mixture which is then heated to a temperature of 142 °C in a nitrogen atmosphere. Sulfur (88.5 parts) is added in three increments while maintained in a reaction temperature at about 142-145 °C. Heating is continued to raise the temperature to 200 °C and the mixture is maintained at this temperature for about 5 hours while sparging with nitrogen. The reaction mixture then is filtered through a filter aid at a temperature of about 70 °C, and the filtrate is the desired product containing 10.07 % sulfur (theory 10).

### Example 4

A mixture of 750 parts of lard oil, 250 parts of soybean oil, 454 parts of commercial $C_{16-18}$ alpha-

olefins and 3 parts of a 50 % aqueous sodium hydroxide solution is prepared and heated to a temperature of about 100 °C over a period of 3 hours. Phosphoric acid (85 %, 2.5 parts) is added to the mixture with stirring over a period of 15 minutes, and the mixture then is heated to 145 °C. Sulfur (186 parts) is added in three increments at this temperature. The mixture then is heated to about 190 °C and maintained at a temperature of about 190-200 °C for a total of about 11 hours in a nitrogen atmosphere. After cooling to about 100 °C, the mixture is filtered through a filter aid and the filtrate is the desired product containing 9.8 % sulfur (theory 10.0).

Example 5

A mixture of 750 parts of lard oil, 250 parts of soybean oil, 454 parts of a commercial $C_{16-18}$ alpha-olefins and 2 parts of a 50 % aqueous sodium hydroxide solution is prepared and heated from room temperature to 100 °C in about 3 hours. Phosphoric acid (85 %, 2.5 parts) and 30 parts of oleic acid are added and this mixture is heated to 150 °C whereupon 184 parts of sulfur are added in three increments over a 15 minute period. The temperature of the reaction mixture then is raised to about 200 °C and maintained at this temperature while sparging with nitrogen for about 8 hours. After cooling the mixture to about 100 °C, the mixture is filtered through a filter aid, and the filtrate is the desired product containing 10.33 % sulfur (theory 10.5).

Example 6

The general procedure of Example 5 is repeated except the mixture contains 4 parts of a 50 % sodium hydroxide solution. The product obtained in this manner contains 10.39 % sulfur.

Example 7

A mixture of 750 parts of lard oil, 250 parts of soybean oil, 30 parts of oleic acid and 454 parts of a commercial $C_{16-18}$ alpha-olefin is heated to a temperature of 100 °C over a period of 3 hours. Phosphoric acid (85 %, 2.5 parts) is added to the mixture which is then heated to 145 °C whereupon 184 parts of sulfur are added in three increments over a 15 minute period. The mixture is maintained at 200 °C for 2 hours and heating is continued at this temperature while sparging with nitrogen for about 6 hours. The mixture then is cooled to 100 °C and filtered. The filtrate is the desired product containing 10.63 % sulfur.

Example 8

A mixture of 667 parts of lard oil, 333 parts of soybean oil, 454 parts of a commercial $C_{16-18}$ alpha-olefins and 2 parts of a 50 % aqueous solution of sodium hydroxide is prepared and sparged with nitrogen while heating the mixture to a temperature of about 100 °C. The mixture is cooled to room temperature whereupon 3 parts of 85 % phosphoric acid are added with stirring followed by the addition of 53 parts of oleic acid. The mixture is heated to 145 °C whereupon 209 parts of sulfur are added in three increments. The reaction mixture is heated to 170 °C whereupon an exothermic reaction occurs raising the temperature of the reaction mixture to about 208 °C. The mixture is cooled to 200 °C and maintained at this temperature for a total of about 12 hours. The mixture is cooled to about 60-70 °C and filtered through a filter aid. The filtrate is the desired product containing 11.44 % sulfur (theory 12.18).

Example 9

A mixture of 750 parts of lard oil, 250 parts of soybean oil, 454 parts of commercial $C_{16-18}$ alpha-olefins and 30 parts of oleic acid is prepared, and .5 parts of 85 % phosphoric acid are added. The mixture is heated to 150 °C while sparging with nitrogen. The nitrogen sparger is removed and 184 parts of sulfur are added in two increments. The reaction mixture is maintained at about 200 °C for 1 hour, and the reaction mixture is stripped at about 200 °C for 0.25 hour at 35 mm. of mercury. After cooling, the mixture is filtered through a filter aid, and the filtrate is the desired product containing 11.3 % sulfur.

Example 10

A mixture of 333 parts of lard oil, 167 parts of a sunflower oil containing about 83 % of oleic acid, 27 parts of oleic acid, 227 parts of a commercial $C_{16-18}$ alpha-olefin mixture and 1.1 parts of 85 % phosphoric acid is heated to 150 °C. Sulfur (93 parts) is added in two increments. The mixture is heated to 200 °C (exothermic to 205 °C). The mixture is cooled to about 200 °C and maintained at this temperature for one hour and thereafter for 2.5 hours while sparging with nitrogen to remove volatiles. The mixture is filtered through a filter aid, and the filtrate is the desired product containing 10.8 % sulfur (theory 10.0 %).

The sulfurized compositions of this invention can be employed as general purpose antioxidants, extreme pressure and friction modifiers in a variety of lubricating compositions based on diverse oils of lubricating viscosity, including natural and synthetic lubricating oils and mixtures thereof. The lubricating

compositions contemplated include crank-case lubricating oils for spark-ignited and compression-ignited internal combustion engines including automobile and truck engines, two-cycle engine lubricants, aviation piston engines, marine and railroad diesel engines, and the like. However, automatic transmission fluids, transaxle lubricants, gear lubricants, metal-working lubricants, hydraulic fluids, and other lubricating oil and grease compositions also can benefit from the incorporation of the present compositions.

The compositions of the invention can be added directly to the lubricant. Preferably, however, they are diluted with a substantially inert, normally liquid organic diluent such as mineral oil, naphtha, benzene, toluene or xylene, to form an additive concentrate. These concentrates usually contain from about 20 % to about 90 % by weight of the sulfurized compositions of this invention and may contain, in addition, one or more other additives known in the art and described below. The remainder of the concentrate is the substantially inert normally liquid diluent.

The lubricating oil compositions of the present invention comprise a major amount of oil of lubricating viscosity, including natural and synthetic lubricating oils and mixtures thereof.

Natural oils include animal oils and vegetable oils (e. g., castor oil, lard oil) as well as mineral lubricating oils such as liquid petroleum oils and solvent-treated or acid-treated mineral lubricating oils of the paraffinic, naphthenic or mixed paraffinic-naphthenic types. Oils of lubricating viscosity derived from coal or shale are also useful. Synthetic lubricating oils include hydrocarbon oils and halosubstituted hydrocarbon oils such as polymerized and interpolymerized olefins (e. g., polybutylenes, polypropylenes, propylene-isobutylene copolymers, chlorinated polybutylenes, etc.) ; poly(1-hexenes), poly(1-octenes), poly(1-decenes), etc. and mixtures thereof ; alkylbenzenes (e. g., dodecylbenzenes, tetradecylbenzenes, dinonylbenzenes, di-(2-ethylhexyl)-benzenes, etc.) ; polyphenyls (e. g., biphenyls, terphenyls, alkylated polyphenyls, etc.) ; alkylated diphenyl ethers and alkylated diphenyl sulfides and the derivatives, analogs and homologs thereof and the like.

Alkylene oxide polymers and interpolymers and derivatives thereof where the terminal hydroxyl groups have been modified by esterification, etherification, etc., constitute another class of known synthetic lubricating oils that can be used. These are exemplified by the oils prepared through polymerization of ethylene oxide or propylene oxide, the alkyl and aryl ethers of these polyoxyalkylene polymers (e. g., methylpolyisopropylene glycol ether having an average molecular weight of about 1 000, diphenyl ether of polyethylene glycol having a molecular weight of about 500-1 000, diethyl ether of polypropylene glycol having a molecular weight of about 1 000-1 500, etc.) or mono- and polycarboxylic esters thereof, for example, the acetic acid esters, mixed $C_3$-$C_8$ fatty acid esters, or the $C_{13}$ Oxo acid diester of tetraethylene glycol.

Another suitable class of synthetic lubricating oils that can be used comprises the esters of dicarboxylic acids (e. g., phthalic acid, succinic acid, alkyl succinic acids, alkenyl succinic acids, maleic acid, azelaic acid, suberic acid, sebacic acid, fumaric acid, adipic acid, linoleic acid dimer, malonic acid, alkyl malonic acids, alkenyl malonic acids, etc.) with a variety of alcohols (e. g., butyl alcohol, hexyl alcohol, dodecyl alcohol, 2-ethylhexyl alcohol, ethylene glycol, diethylene glycol monoether, propylene glycol, etc.). Specific examples of these esters include dibutyl adipate, di(2-ethylhexyl) sebacate, di-n-hexyl fumarate, dioctyl sebacate, diisooctyl azelate, diisodecyl azelate, dioctyl phthalate, didecyl phthalate, dieicosyl sebacate, the 2-ethylhexyl diester of linoleic acid dimer, the complex ester formed by reacting one mole of sebacic acid with two moles of tetraethylene glycol and two moles of 2-ethylhexanoic acid and the like.

Esters useful as synthetic oils also include those made from $C_5$ to $C_{12}$ monocarboxylic acids and polyols and polyol ethers such as neopentyl glycol, trimethylol propane, pentaerythritol, dipentaerythritol, tripentaerythritol, etc.

Silicon-based oils such as the polyalkyl-, polyaryl-, polyalkoxy-, or polyaryloxy-siloxane oils and silicate oils comprise another useful class of synthetic lubricants (e. g., tetraethyl silicate, tetraisopropyl silicate, tetra-(2-ethylhexyl) silicate, tetra-(4-methyl-hexyl) silicate, tetra-(p-tert-butyl-phenyl) silicate, hexyl-(4-methyl-2-pentoxy) disiloxane, poly(methyl) siloxanes, poly(methylphenyl) siloxanes, etc.). Other synthetic lubricating oils include liquid esters of phosphorus-containing acids (e. g., tricresyl phosphate, trioctyl phosphate, diethyl ester of decane phosphonic acid, etc.), polymeric tetrahydrofurans and the like.

Unrefined, refined and rerefined oils, either natural or synthetic (as well as mixtures of two or more of any of these) of the type disclosed hereinabove can be used in the compositions of the present invention. Unrefined oils are those obtained directly from a natural or synthetic source without further purification treatment. For example, a shale oil obtained directly from retorting operations, a petroleum oil obtained directly from primary distillation or ester oil obtained directly from an esterification process and used without further treatment would be an unrefined oil. Refined oils are similar to the unrefined oils except they have been further treated in one or more purification steps to improve one or more properties. Many such purification techniques are known to those skilled in the art such as solvent extraction, secondary distillation, acid or base extraction, filtration, percolation, etc. Rerefined oils are obtained by processes similar to those used to obtain refined oils applied to refined oils which have been already used in service. Such rerefined oils are also known as reclaimed or reprocessed oils and often are additionally processed by techniques directed to removal of spent additives and oil breakdown products.

The sulfurized compositions of the present invention will normally be employed in the lubricating composition of the invention in an amount of from about 0.001 % to about 20 % by weight of the particular oil in which they are utilized. The optimum amount to be used in a given lubricant obviously would depend on the other contents of the particular lubricating composition, the operating conditions to which it is to be subjected, and the particular additives employed. In lubricating compositions operated under extremely adverse conditions, such as lubricating compositions for marine diesel engines, the compositions may be present in the lubricant in amounts of up to about 30 % by weight, or more, of the total weight of the lubricating composition.

The invention also contemplates the use of other additives in the lubricant compositions of this invention. Such additives are those normally used in lubricating oils such as, for example, detergents, dispersants, oxidation-inhibiting agents, pour point depressing agents, extreme pressure agents, antiwear agents, color stabilizers and anti-foam agents.

The ash-producing detergents are exemplified by oil-soluble neutral and basic salts of alkali or alkaline earth metals with sulfonic acids or carboxylic acids. The most commonly used salts of such acids are those of sodium, potassium, lithium, calcium, magnesium, strontium and barium.

The term « basic salt » is used to designate metals salts wherein the metal is present in stoichiometrically larger amounts than the organic acid group. The commonly employed methods for preparing the basic salts involve heating a mineral oil solution of an acid with a stoichiometric excess of a metal neutralizing agent such as the metal oxide, hydroxide, carbonate, bicarbonate, or sulfide at a temperature of about 50 °C and filtering the resulting mass. The use of a « promoter » in the neutralization step to aid the incorporation of a large excess of metal likewise is known. Examples of compounds useful as the promoter include phenolic substances such as phenol, naphthol, alkylphenol, thiophenol, sulfurized alkylphenol, and condensation products of formaldehyde with a phenolic substance ; alcohols such as methanol, 2-propanol, octyl alcohol, cellosolve, carbitol, ethylene glycol, stearyl alcohol, and cyclohexyl alcohol ; and amines such as aniline, phenylenediamine, phenothiazine, phenyl-betanaphthylamine, and dodecylamine. A particularly effective method for preparing the basic salts comprises mixing an acid with an excess of a basic alkaline earth metal neutralizing agent and at least one alcohol promoter, and carbonating the mixture at an elevated temperature such as 60-200 °C.

Ashless detergents and dispersants are so called despite the fact that, depending on its constitution, the dispersant may upon combustion yield a non-volatile material such as boric oxide ; however, it does not ordinarily contain metal and therefore does not yield a metal-containing ash on combustion. Many types are known in the art, and any of them are suitable for use in the lubricant compositions of this invention. The following are illustrative :

(1) Reaction products of carboxylic acids (or derivatives thereof) containing at least about 34 and preferably at least about 54 carbon atoms with nitrogen containing compounds such as amine, organic hydroxy compounds such as phenols and alcohols, and/or basic inorganic materials. Examples of these « carboxylic dispersants » are described in British Patent 1,306,529 and in many U.S. patents including the following :

| | | |
|---|---|---|
| 3,163,603 | 3,351,552 | 3,541,012 |
| 3,215,707 | 3,399,141 | 3,542,680 |
| 3,271,310 | 3,433,744 | 3,574,101 |
| 3,281,357 | 3,448,048 | 3,630,904 |
| 3,311,558 | 3,451,933 | 3,632,511 |
| 3,340,281 | 3,467,668 | 3,725,441 |
| 3,346,493 | 3,522,179 | Re 26,433 |

(2) Reaction products of relatively high molecular weight aliphatic or alicyclic halides with amines, preferably polyalkylene polyamines. These may be characterized as « amine dispersants » and examples thereof are described for example, in the following U.S. patents :

| | |
|---|---|
| 3,275,554 | 3,454,555 |
| 3,438,757 | 3,565,804 |

(3) Reaction products of alkyl phenols in which the alkyl group contains at least about 30 carbon atoms with aldehydes (especially formaldehyde) and amines (especially polyalkylene polyamines), which may be characterized as « Mannich dispersants ». The materials described in the following U.S. patents are illustrative :

| | | |
|---|---|---|
| 2,459,112 | 3,442,808 | 3,591,598 |
| 2,984,550 | 3,454,497 | 3,634,515 |
| 3,166,516 | 3,461,172 | 3,697,574 |
| 3,355,270 | 3,539,633 | 3,725,480 |
| 3,413,347 | 3,586,629 | 3,980,569 |

(4) Products obtained by post-treating the carboxylic, amine or Mannich dispersants with such reagents as urea, thiourea, carbon disulfide, aldehydes, ketones, carboxylic acids, hydrocarbon-substituted succinic anhydrides, nitriles, epoxides, boron compounds, or the like. Exemplary materials of this type are described in the following U.S. patents :

| | | | |
|---|---|---|---|
| 3,036,003 | 3,282,955 | 3,493,520 | 3,639,242 |
| 3,200,107 | 3,366,569 | 3,513,093 | 3,649,659 |
| 3,254,025 | 3,373,111 | 3,539,633 | 3,697,574 |
| 3,278,550 | 3,442,808 | 3,579,450 | 3,703,536 |
| 3,281,428 | 3,455,832 | 3,600,372 | 3,708,422 |

(5) Interpolymers of oil-solubilizing monomers such as decyl methacrylate, vinyl decyl ether and high molecular weight olefins with monomers containing polar substituents, e. g., aminoalkyl acrylates or acrylamides and poly-(oxyethylene)-substituted acrylates. These may be characterized as « polymeric dispersants » and examples thereof are disclosed in the following U.S. patents :

| | |
|---|---|
| 3,329,658 | 3,666,730 |
| 3,449,250 | 3,687,849 |
| 3,519,565 | 3,702,300 |

Auxiliary extreme pressure agents and corrosion- and oxidation-inhibiting agents which may be included in the lubricants of the invention are exemplified by chlorinated aliphatic hydrocarbons such as chlorinated wax ; organic sulfides and polysulfides such as benzyl disulfide, bis(chlorobenzyl) disulfide, dibutyl tetrasulfide, sulfurized methyl ester of oleic acid, sulfurized alkylphenol, sulfurized dipentene, and sulfurized terpene. Group II metal phosphorodithioates also may be included in some of the lubricant. Examples of useful metal phosphorodithioates include zinc dicyclohexylphosphorodithioate, zinc dioctylphosphorodithioate, barium di(heptylphenyl) phosphorodithioate, cadmium dinonyl-phosphorodithioate, and the zinc salt of a phosphorodithioic acid produced by the reaction of phosphorus pentasulfide with an equimolar mixture of isopropyl alcohol and n-hexyl alcohol. When it is desired to formulate lubricating oils containing low amounts of phosphorus, such phosphorodithioiates should be avoided when possible.

Many of the above-mentioned auxiliary extreme pressure agents and corrosion-oxidation inhibitors also serve as antiwear agents. Zinc dialkylphosphorodithioates are well known examples.

Pour point depressants are a particularly useful type of additive often included in the lubricating oils described herein. The use of such pour point depressants in oil-based compositions to improve low temperature properties of oil-based compositions is well known in the art. See, for example, page 8 of « Lubricant Additives » by C.V. Smalheer and R. Kennedy Smith (Lezius-Hiles Co. publishers, Cleveland, Ohio, 1967).

Examples of useful pour point depressants are polymethacrylates ; polyacrylates ; polyacrylamides ; condensation products of haloparaffin waxes and aromatic compounds ; vinyl carboxylate polymers ; and terpolymers of dialkylfumarates, vinyl esters of fatty acids and alkyl vinyl ethers. Pour point depressants useful for the purposes of this invention, techniques for their preparation and their uses are described in U.S. Patents 2,387,501 ; 2,015,748 ; 2,655,479 ; 1,815,022 ; 2,191,498 ; 2,666,746 ; 2,721,877 ; 2,721,878 ; and 3,250,715.

Anti-foam agents are used to reduce or prevent the formation of stable foam. Typical anti-foam agents include silicones or organic polymers. Additional anti-foam compositions are described in « Foam Control Agents », by Henry T. Kerner (Noyes Data Corporation, 1976), pages 125-162.

The sulfurized compositions of this invention have been found to be particularly effective as additives in metal working lubricants where they impart excellent extreme pressure characteristics to the lubricant. An ingredient which is often preferably included in the metal working lubricants of this invention (especially for stainless steel) is at least one chlorinated wax, especially a chlorinated paraffin wax. The chlorinated was preferably has a molecular weight between about 350 and about 700 and contains about 30 % to about 70 % chlorine by weight.

Other additives which may optionally be present in the metal working lubricants for use in this invention include :

antioxidants, typically hindered phenols ;

surfactants, usually nonionic surfactants such as oxyalkylated phenols and the like ; and

corrosion, wear and rust-inhibiting agents.

Friction modifying agents, of which are the following are illustrative : alkyl or alkenyl phosphates or phosphites in which the alkyl or alkenyl group contains from about 10 to about 40 carbon atoms, and metal salts thereof, especially zinc salts ; $C_{10-20}$ fatty acid amides ; $C_{10-20}$ alkyl amines, especially tallow amines and ethoxylated derivatives thereof ; salts of such amines with acids such as boric acid or phosphoric acid which have been partially esterified as noted above ; $C_{10-20}$ alkyl-substituted imidazolines and similar nitrogen heterocycles.

The metal working lubricants whose use is contemplated according to this invention will generally contain from about 0.5 % to about 15 % by weight, preferably from about 1 % to about 10 %, of the sulfurized compositions of the invention. Other ingredients such as those described above will be present in amounts sufficient to provide the metal working lubricant with the properties such as antioxidants, corrosion-inhibition, wear-resistance, rust-inhibition, etc.

The following are illustrative examples of the concentrates and lubricants of the invention. All parts and percentages are by weight of the total composition unless otherwise indicated. All amounts listed in the examples, except those for mineral oil, are exclusive of oil present as diluent.

| Example A (Concentrate) | Parts by Weight |
|---|---|
| Mineral oil | 50 |
| Product of Example 5 | 50 |

| Example B (Concentrate) | |
|---|---|
| Mineral oil | 60 |
| Product of Example 6 | 40 |

Table I

| Examples C-G (Lubricants) | C | D | E | F | G |
|---|---|---|---|---|---|
| Mineral oil | 95 | 95 | 96 | 96 | 95 |
| Product of Example 1 | 5 | -- | -- | -- | -- |
| " 2 | -- | 5 | -- | -- | -- |
| " 4 | -- | -- | 4 | -- | -- |
| " 7 | -- | -- | -- | 4 | -- |
| " 10 | -- | -- | -- | -- | 5 |

Table II

| Examples H-J (Lubricants) | H | I | J |
|---|---|---|---|
| Mineral oil (SAE-80) | 93.48 | 93.68 | 93.995 |
| Product of Example 6 | 5.0 | -- | -- |
| " 7 | -- | 5.0 | 4.0 |
| Zinc salt of O,O-di ($C_{12-14}$ alkyl) phosphorodithioic acid | 1.0 | 0.8 | 1.5 |
| Poly(alkyl methacrylate) pour point depressant | 0.5 | 0.5 | 0.5 |
| Silicone anti-foam agent | 0.02 | 0.02 | 0.005 |

Table III

| Examples K-L | K | L | M |
|---|---|---|---|
| Mineral oil | 95.0 | 93.0 | 94.0 |
| Product of Example 6 | 2.5 | -- | 2.0 |
| " 7 | -- | 3.5 | -- |
| Chlorinated (about 42% chlorine) paraffin wax | 2.5 | 3.5 | 3.0 |
| Triphenyl phosphate | -- | -- | 1.0 |

Any metal to be worked may be treated according to the method of this invention. Examples are ferrous metals, aluminum, copper, magnesium, titanium, zinc and manganese. Alloys thereof, with and without other elements such as silicon, may also be treated ; examples of suitable alloys are brass and various steels (e. g., stainless steel).

The metal working compositions used in the method of this invention can be applied to the metal workpiece prior to or during the working operation in any suitable manner. They may be applied to the entire surface of the metal, or to any portion of that surface with which contact is desired. For example, the lubricant can be brushed or sprayed on the metal, or the metal can be immersed in a bath of the lubricant. In high speed metal forming operations spraying or immersion are preferred.

In a typical embodiment of the method of this invention, a ferrous metal workpiece is coated with the lubricant prior to the working operation. For example, if the workpiece is to be cut it may be coated with the lubricant before contact with the cutting tool. (The invention is particularly useful in connection with cutting operations.) It is also within the scope of the invention to apply the lubricant to the workpiece as it contacts the cutting tool, or to apply it to the cutting tool itself whereupon it is transferred to the workpiece by contact. Thus, the method of this invention in a generic sense comprises any metal working operation wherein the workpiece has on its surface, during said operation, the above-described lubricant regardless of how applied.

**Claims**

1. A sulfurized composition prepared by reacting at a temperature in the range of about 50 °C to about 350 °C, sulfur in an amount sufficient to cause sulfurization, with a reactant selected from

(A) fatty acid esters of polyhydric alcohols, and

(B) fatty acids, fatty acid esters of a monohydric alcohol, or mixtures thereof,

(C) aliphatic olefins containing from 8 to 36 carbon atoms, or

(D) mixtures of any of (A), (B) and (C),

(E) in the presence of a catalytic amount of a catalyst selected from a phosphoric acid, a phosphoric acid salt, or a mixture thereof.

2. A sulfurized composition as claimed in claim 1 wherein the reaction is conducted at a temperature of from about 100 °C to about 250 °C and the catalyst is phosphoric acid.

3. A sulfurized composition as claimed in either of claims 1 and 2, prepared by reacting sulfur with a mixture comprising

(B) about 100 parts by weight of at least one fatty acid, fatty acid ester of a monohydric alcohol, or a mixture thereof, and

(C) from about 0 to about 400 parts by weight of at least one aliphatic olefin containing from 8 to 36 carbon atoms.

4. A process for preparing a sulfurized composition comprising the steps of :

reacting, at a temperature in the range of about 50 °C to about 350 °C, sulfur with a hydrocarbyl selected from fatty acids, fatty acid esters of monohydric alcohols, and aliphatic olefins containing 8 to 36 carbon atoms ;

continuing the reacting until the hydrocarbyl is sulfurized ; and

isolating a sulfurized composition reaction product,

wherein the reaction is carried out in the presence of a catalytic amount of a catalyst comprising a phosphoric acid or a phosphoric acid salt.

5. A process as claimed in claim 4 wherein the reaction is carried out at a temperature in the range of about 100 °C to about 250 °C.

6. A process as claimed in either of claims 4 and 5 wherein the catalyst is phosphoric acid and the hydrocarbyl is an aliphatic olefin containing 8 to 36 carbon atoms and the olefin is an alpha-olefin.

7. A process as claimed in either of claims 4 and 5 wherein the hydrocarbyl is a fatty acid ester which is a fatty oil.

8. A process as claimed in either of claims 4 and 5 wherein the hydrocarbyl is a mixture of fatty acid esters containing at least 50 % by weight of lard oil.

9. A sulfurized composition produced by the process as claimed in any one of claims 4 to 8.

10. A lubricating oil composition comprising a major amount of an oil of lubricating viscosity and a minor, property improving amount of a composition according to any one of claims 1 to 3 and 9.

11. A method for lubricating metal during working thereof which comprises applying to said metal a composition as claimed in claim 10.

**Patentanspruch**

1. Geschwefelte Zusammensetzung, hergestellt durch Umsetzung bei einer Temperatur im Bereich von etwa 50 bis etwa 350 °C von Schwefel in für eine Sulfurisierung ausreichender Menge mit einem der Umsetzungsteilnehmer

(A) Fettsäureester von mehrwertigen Alkoholen, und

(B) Fettsäure, Fettsäureester eines einwertigen Alkohols, oder Gemische davon,

(C) aliphatische Olefine mit 8 bis 36 Kohlenstoffatomen, oder

(D) irgendwelche Gemische von (A), (B) und (C),

(E) in Gegenwart einer katalytischen Menge eines Katalysators, nämlich einer Phosphorsäure, eines Phosphorsäuresalzes, oder eines Gemisches davon.

2. Geschwefelte Zusammensetzung nach Anspruch 1, wobei die Umsetzung bei einer Temperatur von etwa 100 bis etwa 250 °C durchgeführt wird und der Katalysator Phosphorsäure ist.

3. Geschwefelte Zusammensetzung nach einem der Ansprüche 1 und 2, hergestellt durch Umsetzung von Schwefel mit einem Gemisch aus

(B) etwa 100 Gewichtsteilen mindestens einer Fettsäure, eines Fettsäureesters eines einwertigen Alkohols, oder eines Gemisches davon, und

(C) etwa 0 bis etwa 400 Gewichtsteilen mindestens eines aliphatischen Olefins mit 8 bis 36 Kohlenstoffatomen.

4. Verfahren zur Herstellung einer geschwefelten Zusammensetzung, umfassend die Stufen :

Umsetzung bei einer Temperatur im Bereich von etwa 50 bis etwa 350 °C von Schwefel mit einem Kohlenwasserstoff, nämlich Fettsäuren, Fettsäureester von einwertigen Alkoholen und aliphatischen Olefinen mit 8 bis 36 Kohlenstoffatomen ;

Fortführung der Umsetzung, bis der Kohlenwasserstoff sulfurisiert ist ; und

Abtrennung der geschwefelten Zusammensetzung als Reaktionsprodukt,

wobei die Umsetzung in Gegenwart einer katalytischen Menge eines Katalysators, nämlich einer Phosphorsäure und eines Phosphorsäuresalzes durchgeführt wird.

5. Verfahren nach Anspruch 4, in dem die Umsetzung bei einer Temperatur im Bereich von etwa 100 bis etwa 250 °C durchgeführt wird.

6. Verfahren nach einem der Ansprüche 4 und 5, in dem der Katalysator Phosphorsäure ist und der Kohlenwasserstoff ein aliphatisches Olefin mit 8 bis 36 Kohlenstoffatomen ist und das Olefin ein α-Olefin ist.

7. Verfahren nach einem der Ansprüche 4 und 5, in dem der Kohlenwasserstoff ein Fettsäureester mit einem Fett-Öl ist.

8. Verfahren nach einem der Ansprüche 4 und 5, in dem der Kohlenwasserstoff ein Gemisch von Fettsäureestern mit mindestens 50 Gew.-% Lardöl ist.

9. Geschwefelte Zusammensetzung, hergestellt nach dem Verfahren nach einem der Ansprüche 4 bis 8.

10. Schmieröl-Zusammensetzung, umfassend eine größere Menge eines Öls mit schmierender Viskosität und eine kleinere, Eigenschaft verbessernde Menge einer Zusammensetzung nach einem der Ansprüche 1 bis 3 und 9.

11. Verfahren zum Schmieren von Metall während seiner Bearbeitung, welches das Aufbringen einer Zusammensetzung nach Anspruch 10 auf das Metall umfaßt.

**Revendications**

1. Une composition sulfurée préparée en faisant réagir à une température comprise entre environ 50 °C et environ 350 °C du soufre, en quantité suffisante pour causer une sulfuration, avec un corps en réaction choisi parmi

(A) des esters d'acide gras d'alcools polyhydriques,

(B) des acides gras, des esters d'acide gras d'un alcool monohydrique ou leurs mélanges,

(C) des oléfines aliphatiques contenant de 8 à 36 atomes de carbone ou

(D) des mélanges de n'importe lesquels de (A), (B) et (C),

(E) en présence d'une quantité catalytique d'un catalyseur choisi parmi un acide phosphorique, un sel d'acide phosphorique ou leurs mélanges.

2. Une composition sulfurée selon la revendication 1, pour laquelle la réaction est conduite à une température comprise entre environ 100 °C et environ 250 °C et le catalyseur est de l'acide phosphorique.

3. Une composition sulfurée selon l'une des revendications 1 et 2, préparée en faisant réagir du soufre avec un mélange comprenant

(B) environ 100 parties en poids d'au moins un acide gras, un ester d'acide gras d'un alcool monohydrique ou un mélange de tels composés et

(C) d'environ 0 à environ 400 parties en poids d'au moins une oléfine aliphatique contenant de 8 à 36 atomes de carbone.

4. Un procédé pour la préparation d'une composition sulfurée comprenant les étapes selon lesquelles :

on fait réagir, à une température comprise entre environ 50 °C et environ 350 °C, du soufre avec un composé hydrocarboné choisi parmi des acides gras, des esters d'acide gras d'alcools monohydriques et des oléfines aliphatiques contenant de 8 à 36 atomes de carbone ;

on continue la réaction jusqu'à ce que le composé hydrocarboné soit sulfuré ; et

on isole comme produit de réaction une composition sulfurée,

la réaction étant conduite en présence d'une quantité catalytique d'un catalyseur comprenant un acide phosphorique ou un sel d'acide phosphorique.

5. Un procédé selon la revendication 4, dans lequel la réaction est conduite à une température comprise entre environ 100 °C et environ 250 °C.

6. Un procédé selon l'une des revendications 4 et 5, dans lequel le catalyseur est de l'acide phosphorique et le composé hydrocarboné est une oléfine aliphatique contenant de 8 à 36 atomes de carbone et l'oléfine est une alpha-oléfine.

7. Un procédé selon l'une des revendications 4 et 5, dans lequel le composé hydrocarboné est un ester d'acide gras qui est une huile grasse.

8. Un procédé selon l'une des revendications 4 et 5, dans lequel le composé hydrocarboné est un mélange d'esters d'acide gras contenant au moins 50 % en poids d'huile de lard.

9. Une composition sulfurée produite par le procédé selon l'une quelconque des revendications 4 à 8.

10. Une composition d'huile lubrifiante comprenant une quantité majeure d'une huile d'une viscosité lubrifiante et une quantité mineure, convenable pour améliorer les propriétés, d'une composition selon l'une quelconque des revendications 1 à 3 et 9.

11. Un procédé pour lubrifier un métal durant son travail, qui comprend l'application à ce métal d'une composition selon la revendication 10.